# EUROPEAN PATENT SPECIFICATION

(11) **EP 1 677 393 B1**
(45) Date of publication and mention of the grant of the patent: **09.02.2011**
(21) Application number: 05028668.1
(22) Date of filing: 29.12.2005
(51) Int. Cl.: H01R 24/58, H01R 12/55, H01R 24/38, H01R 13/40

(54) **External communication jack for mobile terminal**
Externe Kommunikation Jackverbinder für Mobilgeräte
Jack pour communication externe d'un terminal mobile

(30) Priority: 31.12.2004 KR 2004118447
(43) Date of publication of application: 05.07.2006
(73) Proprietor: LG Electronics Inc., Youngdungpo-gu Seoul (KR)
(72) Inventor: Nam, Sang-Eun, Gwangmyeong Gyeonggi-Do (KR)
(74) Representative: Urner, Peter

(56) References cited:
- US-A- 3 930 709
- US-A- 3 949 180
- US-A- 4 350 406
- US-A- 4 737 124
- US-A- 4 927 374
- US-A- 5 645 450

## Description

### FIELD OF THE INVENTION

The present invention relates to an external communication jack for a mobile terminal and, more particularly, to an external communication jack that prevents damage caused by rotation of a plug inserted therein.

### BACKGROUND OF THE INVENTION

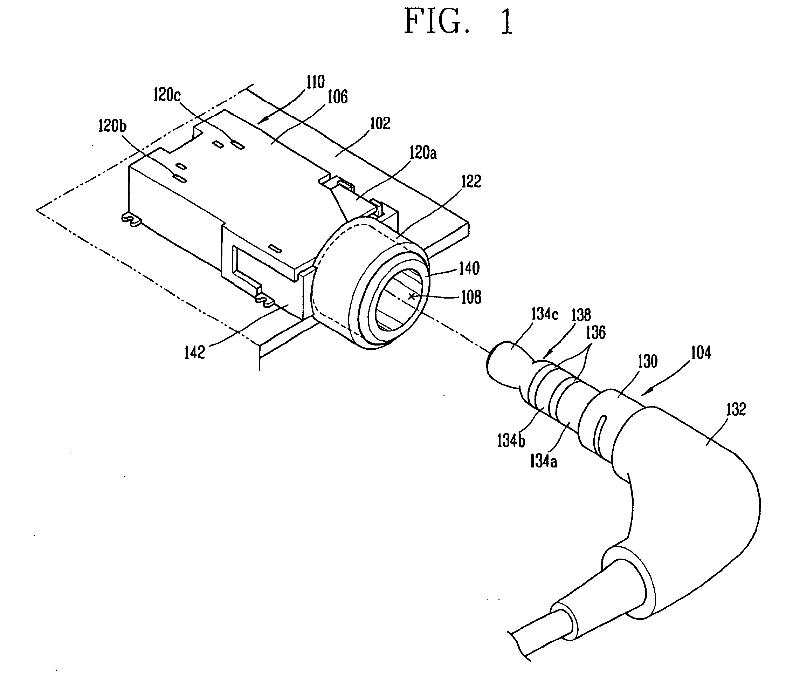

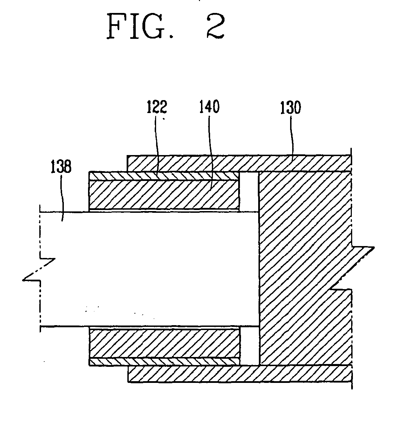

Figure 1 is an exploded perspective view of an external communication jack of a mobile terminal in accordance with the related art. Figure 2 is a sectional view illustrating a state where a plug of an earphone is insertedly positioned in the external communication jack in accordance with the related art.

The related art external communication jack 110 includes a body 106 mounted in a printed circuit board (PCB) 102 of a mobile terminal and an insertion passage 108 formed at its central portion, into which a plug 104 of an earphone is inserted. Platy connection terminals 120a, 120b and 120c are mounted at certain intervals in the insertion passage 108 of the body 106, which are soldered to the PCB 102 so as to be electrically operational with a bar-type connection part 138 of the plug 104. An annular connection terminal 122 is mounted at a front side of the body 106, into which an annular connection part 130 of the plug 104 is inserted.

The plug 104 of the earphone includes a plug body 132 to which a wire is connected. First, second and third connection portions 134a, 134b and 134c, respectively, extend from the plug body 132 and are sequentially formed at certain intervals with an insulation layer 136 positioned as a boundary therebetween. The annular connection part 130 is mounted at the plug body 132 and formed in a ring shape with a certain interval at an outer circumferential surface of the bar-type connection part 138.

The platy connection terminals 120a, 120b and 120c which contact the bar-type connection part 138 in the insertion passage 108 are sequentially mounted at the body 106, and a cylindrical terminal mounting part 140 is formed at the front side of the body 106, on which the annular connection terminal 122 is mounted.

The first connection terminal 120a elastically contacts the first connection portion 134a. The second connection terminal 120b is disposed at a certain distance from the first connection terminal 120a and contacts the second connection portion 134b. The third connection terminal 120c is disposed at a certain distance from the second connection terminal 120b and contacts the third connection portion 134c.

The annular connection terminal 122 is formed at the outer circumference of the terminal mounting part 140. A connection plate 142 for transmitting an electrical signal is integrally connected to the PCB 102 by soldering or the like. Specifically, the connection plate 142 is formed as a thin plate type, integrally extends from a rear side of the annular connection terminal 122, is fixed to the body 106, and is connected to the PCB 102 by soldering or the like.

When the plug 104 is mounted to the conventional external communication jack 110, the bar-type connection part 138 of the plug 104 is inserted into the insertion passage 108 and the annular connection part 130 is mounted at the outer circumference of the annular connection terminal 122.

Moreover, the first connection portion 134a of the bar-type connection part 138 contacts the first connection terminal 120a mounted inside the insertion passage 108, the second connection portion 134b contacts the second connection terminal 120b, and the third connection portion 134c contacts the third connection terminal 120c. As stated above, the annular connection part 130 is mounted at the outer circumferential surface of the annular connection terminal 122. Thus, an electrical signal of the mobile terminal can be transmitted to the earphone or an electrical signal of the earphone can be transmitted to the mobile terminal.

However, the related art external communication jack has the following problems.

In a state where the plug 104 is mounted in the external communication jack 110, when the plug 104 is rotated by a user, the annular connection part 130 positioned at the annular connection terminal 122 will also be rotated. Accordingly, a rotational moment is generated at the annular connection terminal 122. This is problematic because a connection portion between the annular connection terminal 122 and the connection plate 142 can be damaged as a result of the generated rotational moment. Moreover, the soldered portion between the connection plate 142 and the PCB 102 can be damaged.

Specifically, when the plug 104 is rotated while being insertedly positioned in the external communication jack 110, because the annular connection part 130 of the plug 104 is elastically installed at the annular connection terminal 122, the rotational force of a rotated annular connection part 130 is transferred to the annular connection terminal 122 to continuously generate a rotational moment at the annular connection terminal 122. This damages a portion between the annular connection terminal 122 and the connection plate 142 and may further damage a soldered portion between the PCB 102 and the connection plate 142.

US 4,927,374 A describes a modular electrical connector assembly. Herein, the connector assembly includes a first connector and a second connector coupled to each other. The first connector has a shiftable sleeve and a housing core mounted on the inner surface of the shiftable sleeve. The housing core includes an anti-rotation tab and an anti-rotation stop. Anti-rotation tab consists of a member having an outer cylindrical surface and a flat stop surface. The shiftable sleeve surrounds housing core. The outer sleeve can be shifted axially relative to the housing core. Rotation of the outer sleeve relative to the housing core is prevented by sleeve anti-rotation stops and a deflectable anti-rotation tab. The sleeve anti-rotation stop engages the anti-rotation stop on the housing core while the deflectable anti-rotation tab engages the flat surface on the anti-rotation tab which extends outwardly from the inner housing core.

US 5,645,450 A describes a shielded connector. Herein, a shielded connector is constituted by a female connector housing, a male terminal fixed to a core wire of a shielded cable, and a metal shield inserted into shielding braid of the shielded cable. The female connector housing has a structure in which substantially cylindrically outer housing is coaxially connected to an inner housing through connection portions provided in the front side of the connector and a metal shield insertion gap is provided between the outer housing and the inner housing. At the forward end of the inner housing, a front wall is formed perpendicularly to the radial direction so as to terminate the inner housing. In the position on the inner side of the front wall of the inner housing, a pair of engagement protrusions are provided in positions opposite to each other so as to radially inwardly project so that the engagement protrusion respectively engage with notches of the mail terminal, to thereby prevent the male terminal from rotating circumferentially.

### SUMMARY OF THE INVENTION

Therefore, an object of the present invention is to provide an external communication jack free from damage in spite of rotation of a plug inserted therein by mutually locking a body and an annular connection terminal to prevent the generation of a rotational moment at the annular connection terminal.

This object is solved by the external communication jacks according to claim 1 and claim 11. Further advantages, refinements and embodiments of the invention are described in the respective sub-claims.

In particular, the present invention is embodied in an external communication jack for a terminal, the external communication jack comprising a body having an insertion passage for accepting a plug, a terminal mounting part formed on the body for mounting the plug, a connection terminal formed at an outer surface of the terminal mounting part and operatively coupled to circuitry for operating the terminal, and a rotation preventing part formed on an outer surface of the terminal mounting part and an inner surface of the connection terminal, wherein the rotation preventing part at least partially prevents rotation of the connection terminal with respect to the terminal mounting part.

Herein, the rotation preventing part comprises a first rotation preventing part formed on the outer surface of the terminal mounting part and a second rotation preventing part formed on the inner surface of the connection terminal, wherein the first rotation preventing part and the second rotation preventing part engage one another to prevent rotation of the connection terminal with respect to the terminal mounting part.

In one aspect of the invention, the first rotation preventing part is a locking rib protruding from an outer surface of the terminal mounting part and the second rotation preventing part is a locking protrusion protruding from an inner surface of the connection terminal, wherein the locking rib operatively engages the locking protrusion to prevent rotation of the connection terminal.

In another aspect of the invention, the first rotation preventing part is a locking rib protruding from an outer surface of the terminal mounting part and the second rotation preventing part is a pair of locking protrusions protruding from an inner surface of the connection terminal, wherein the locking rib operatively engages either of the pair of locking protrusions to prevent rotation of the connection terminal in at least one of a clockwise and counterclockwise direction.

In a further aspect of the invention, the first rotation preventing part is a pair of locking ribs protruding from an outer surface of the terminal mounting part and the second rotation preventing part is a locking protrusion protruding from an inner surface of the connection terminal, wherein each of the pair of locking ribs operatively engages the locking protrusion respectively to prevent rotation of the connection terminal in at least one a clockwise and counterclockwise direction.

In yet another aspect of the invention, the first rotation preventing part is a locking rib protruding from an outer surface of the terminal mounting part and the second rotation preventing part is a locking recess formed in an inner surface of the connection terminal, wherein the locking rib inserts into the locking recess to prevent rotation of the connection terminal.

Preferably, the external communication jack further comprises a release preventing unit operating between the connection terminal and the terminal mounting part for preventing axial movement of the connection terminal with respect to the terminal mounting part. Preferably, the release preventing unit comprises a locking groove formed in a rotational direction on an outer surface of the terminal mounting part and a locking protrusion protruding from an inner surface of the connection terminal, wherein the locking protrusion operatively engages the locking groove to prevent the axial movement of the connection terminal.

Preferably, the locking groove is formed by two protrusion portions formed in a rotational direction on the outer surface of the terminal mounting part and having a certain distance therebetween.

Preferably, the insertion passage houses at least one connection terminal for contacting a connection part of the plug.

In accordance with another embodiment of the present invention, an external communication jack for a terminal comprises a body having an insertion passage for accepting a plug, a terminal mounting part formed on the body for mounting the plug, a connection terminal formed at an outer surface of the terminal mounting part and operatively coupled to circuitry for operating the terminal, and a rotation preventing part formed on the body and the connection terminal for at least partially preventing rotation of the connection terminal with respect to the terminal mounting part.

In one aspect of the invention, the rotation preventing part comprises a stopping protrusion extending from a rear side of the connection terminal, and a stopping recess formed in a longitudinal direction at the body, wherein the stopping protrusion is operatively inserted into the stopping protrusion to prevent rotation of the connection terminal.

In accordance with another embodiment of the present invention, a mobile terminal for accepting a plug comprises a main body, circuitry housed within the main body for operating the mobile terminal, and an external communication jack operatively connected to the circuitry, wherein the external communication jack comprises a body having an insertion passage for accepting the plug, a terminal mounting part formed on the body for mounting the plug, a connection terminal formed at an outer surface of the terminal mounting part and operatively coupled to the circuitry for operating the mobile terminal, and a rotation preventing part formed on at least one of an outer surface of the terminal mounting part and an inner surface of the connection terminal, wherein the rotation preventing part prevents rotation of the connection terminal with respect to the terminal mounting part.

Herein, the rotation preventing part comprises a first rotation preventing part formed on the outer surface of the terminal mounting part and a second rotation preventing part formed on the inner surface of the connection terminal, wherein the first rotation preventing part and the second rotation preventing part engage one another to prevent rotation of the connection terminal with respect to the terminal mounting part.

In one aspect of the invention, the first rotation preventing part is a locking rib protruding from an outer surface of the terminal mounting part and the second rotation preventing part is a locking protrusion protruding from an inner surface of the connection terminal, wherein the locking rib operatively engages the locking protrusion to prevent rotation of the connection terminal.

In another aspect of the invention, the first rotation preventing part is a locking rib protruding from an outer surface of the terminal mounting part and the second rotation preventing part is a pair of locking protrusions protruding from an inner surface of the connection terminal, wherein the locking rib operatively engages either of the pair of locking protrusions to prevent rotation of the connection terminal in at least one of a clockwise and counterclockwise direction.

In a further aspect of the invention, the first rotation preventing part is a pair of locking ribs protruding from an outer surface of the terminal mounting part and the second rotation preventing part is a locking protrusion protruding from an inner surface of the connection terminal, wherein each of the pair of locking ribs operatively engages the locking protrusion respectively to prevent rotation of the connection terminal in at least one a clockwise and counterclockwise direction.

In yet another aspect of the invention, the first rotation preventing part is a locking rib protruding from an outer surface of the terminal mounting part and the second rotation preventing part is a locking recess formed in an inner surface of the connection terminal, wherein the locking rib inserts into the locking recess to prevent rotation of the connection terminal.

Preferably, the external communication jack further comprises a release preventing unit operating between the connection terminal and the terminal mounting part for preventing axial movement of the connection terminal with respect to the terminal mounting part.

Preferably, the release preventing unit comprises a locking groove formed in a rotational direction on an outer surface of the terminal mounting part and a locking protrusion protruding from an inner surface of the connection terminal, wherein the locking protrusion operatively engages the locking groove to prevent the axial movement of the connection terminal.

Preferably, the locking groove is formed by two protrusion portions formed in a rotational direction on the outer surface of the terminal mounting part and having a certain distance therebetween.

Preferably, the insertion passage houses at least one connection terminal for contacting a connection part of the plug.

In accordance with another embodiment of the present invention, a mobile terminal for accepting a plug comprises a main body, circuitry housed within the main body for operating the mobile terminal, and an external communication jack operatively connected to the circuitry, wherein the external communication jack comprises a body having an insertion passage for accepting the plug, a terminal mounting part formed on the body for mounting the plug, a connection terminal formed at an outer surface of the terminal mounting part and operatively coupled to the circuitry for operating the mobile terminal, and a rotation preventing part formed on the body and the connection terminal for at least partially preventing rotation of the connection terminal with respect to the terminal mounting part.

Herein, the rotation preventing part comprises a stopping protrusion extending from a rear side of the connection terminal and a stopping recess formed in a longitudinal direction at the body, wherein the stopping protrusion is operatively inserted into the stopping protrusion to prevent rotation of the connection terminal.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

Figure 1 is a perspective view of an external communication jack for a mobile terminal in accordance with the related art.

Figure 2 is a partial sectional view illustrating a state where a plug of an earphone is insertedly positioned in the external communication jack in accordance with the related art.

Figure 3 is a perspective view of a mobile terminal with an external communication jack mounted therein in accordance with a first embodiment of the present invention.

Figure 4 is a perspective view of the external communication jack in accordance with the first embodiment of the present invention.

Figure 5 is a sectional view of the external communication jack in accordance with the first embodiment of the present invention.

Figure 6 is a perspective view of a release preventing part of the external communication jack in accordance with the first embodiment of the present invention.

Figure 7 is a sectional view of a rotation preventing part of the external communication jack in accordance with a second embodiment of the present invention.

Figure 8 is a sectional view of a rotation preventing part of the external communication jack in accordance with a third embodiment of the present invention.

Figure 9 is a side view of a rotation preventing part of the external communication jack in accordance with a fourth embodiment of the present invention.

Figure 10 is a sectional view of a rotation preventing part of the external communication jack in accordance with a fifth embodiment of the present invention.

### DETAILED DESCRIPTION OF THE PREFERRED EMBODIMENTS

The present invention relates to an external communication jack for a mobile terminal, wherein the external communication jack prevents damage caused by rotation of a plug inserted therein.

An external communication jack for a mobile terminal in accordance with the present invention will now be described with reference to the accompanying drawings. There can be several embodiments of the external communication jack for the mobile terminal in accordance with the present invention, of which the most preferred embodiments will be described.

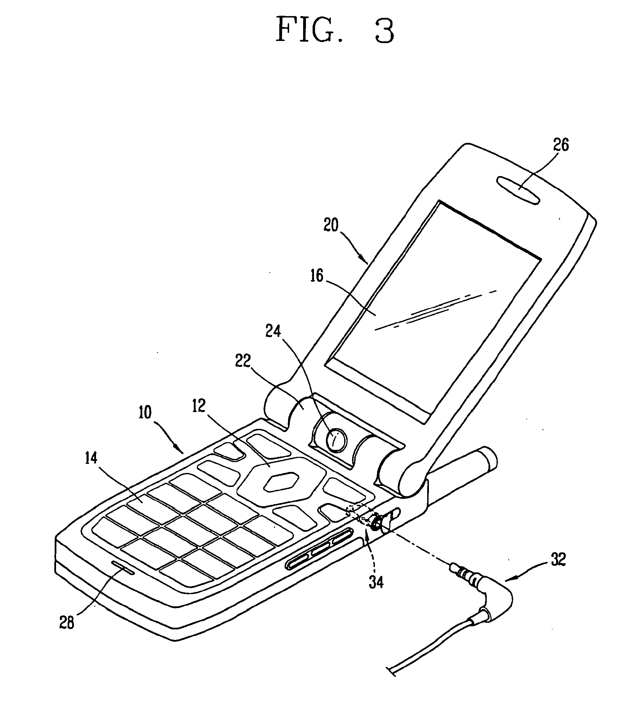

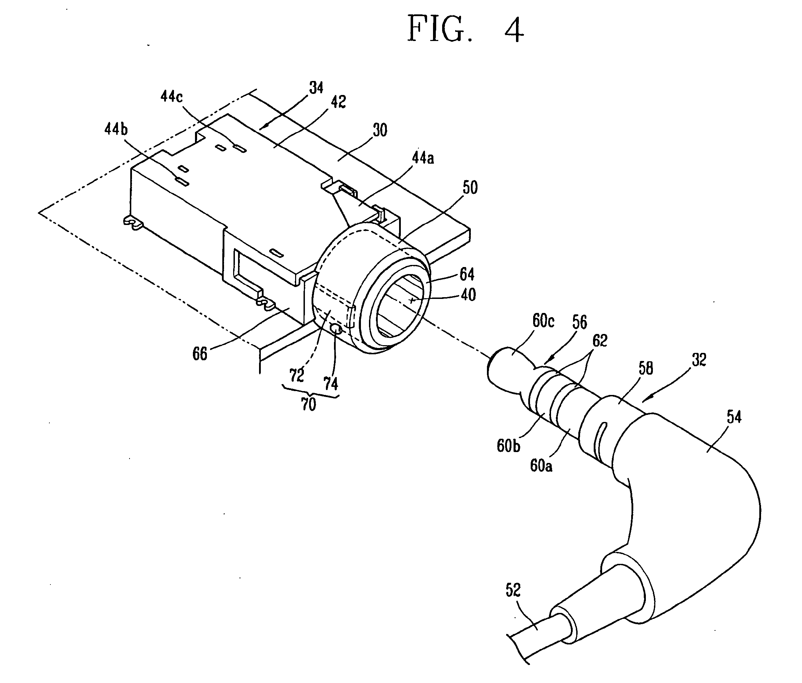

Figure 3 is a perspective view of a mobile terminal with an external communication jack mounted therein in accordance with a first embodiment of the present invention. Figure 4 is a perspective view of the external communication jack in accordance with the first embodiment of the present invention. Although the external communication jack of the present invention is described utilizing the mobile terminal of Figure 3, for example, the present invention may be implemented in other types of mobile terminal devices having various structures.

As shown in Figure 3, the mobile terminal in accordance with the present invention comprises a main body 10 having various menu buttons 12 and dial buttons 14 provided at its front surface, a folder 20 rotatably connected with the main body 10 and having a display 16, such as a liquid crystal display (LCD), for example, for displaying information desired by a user. The mobile terminal further comprises a hinge connection part 22 formed between the main body 10 and the folder 20 for rotatably supporting the folder 20 over the main body 10. A camera 24 may also be rotatably mounted at one side of the hinge connection part 22 for taking a photograph.

A receiver 26 for outputting a voice signal is mounted at an upper surface of the folder 20. A microphone 28 for inputting a voice signal is installed at one side of the main body 10. Referring to Figures 3 and 4, a printed circuit board (PCB) 30 having various circuit components for inputting and outputting various information mounted thereon is installed inside the main body 10. An external communication jack 34 is mounted at one side of the PCB 30, into which a plug 32 of an earphone or other device is inserted.

As shown in Figure 4, the external communication jack 34 comprises a body 42 fixed at the PCB 30 and having an insertion passage 40 formed at its center, into which the plug 32 is inserted. Platy connection terminals 44a, 44b and 44c are mounted at the body 42 and connected to the PCB 30 by soldering or a similar bonding method for facilitating current flow. Preferably, the platy connection terminals 44a, 44b and 44c are sequentially mounted in the insertion passage 40. Moreover, a connection terminal 50 is mounted at an outer circumference of a front side of the body 42.

The plug 32 comprises a plug body 54 to which a power line 52 is connected and a bar type connection part 56 mounted at the plug body 54. The bar type connection part 56 is formed to be inserted into the insertion passage 40 of the body 42 and comprises first, second and third connection portions 60a, 60b and 60c formed at certain distances from each other. An insulation layer 62 is formed between the first connection part 60a and the second connection part 60b, as well as between the second connection part 60b and the third connection part 60c. The plug 32 further comprises an annular connection part 58 mounted at the plug body 54 and disposed with a certain distance at an outer circumferential surface of the bar type connection part 56.

A terminal mounting part 64, into which the bar type connection part 56 may be inserted, is preferably formed in a cylindrical shape at a front side of the body 42. However, it is contemplated that the terminal mounting part may be formed having any various shape, such as a rectangular or trapezoidal shape, for example, in order to accept a plug having the same various shape.

The platy connection terminals 44a, 44b and 44c are sequentially mounted inside the insertion passage 40 of the body 42. When the bar type connection part 56 is inserted into the terminal mounting part 64, the first platy connection terminal 44a contacts the first connection portion 60a of the plug 32, the second platy connection terminal 44b contacts the second connection portion 60b, and the third connection terminal 44c contacts the third connection portion 60c.

Preferably, the connection terminal 50 comprises an annular shape so as to be mounted at the outer circumferential surface of the terminal mounting part 64 of the body 42. However, the connection terminal 50 may have any various shape, such as an ellipse, rectangle, or triangle, for example, in accordance with any various shape the terminal mounting part 64 may have. A connection plate 66 is integrally formed at a rear side of the connection terminal 50.

One end of the connection plate 66 is integrally connected to the rear side of the connection terminal 50 while another end of the connection plate 66 is connected to the PCB 30 by soldering, for example, or any similar bonding method for facilitating current flow, and fixed to the body 42.

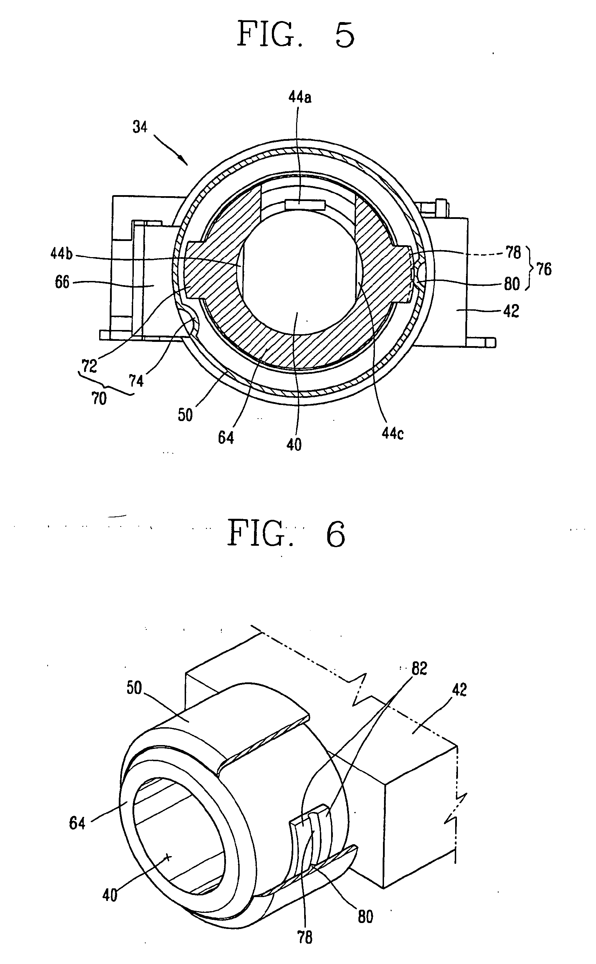

Between the connection terminal 50 and the terminal mounting unit 64, a rotation preventing part 70 is provided for preventing relative rotation of the connection terminal 50 over the terminal mounting part 64. A release preventing unit 76, as shown in Figure 5, is also provided for preventing the release of the connection terminal 50 from the terminal mounting part 64.

Referring to Figure 5, the rotation preventing part 70 comprises a locking rib 72 protruded from the outer circumferential surface of the terminal mounting part 64 of the body 42 and a locking protrusion 74 protruded inwardly from an inner circumferential surface of the connection terminal 50. Preferably, in operation, the locking protrusion 74 is caught at a side of the locking rib 72 to prevent movement of the connection terminal 50.

Preferably, the locking rib 72 outwardly protrudes with a certain width in an axial direction from the outer circumferential surface of the terminal mounting part 64, and the locking protrusion 74 inwardly protrudes from the connection terminal 50 and may be caught at one side of the locking rib 72.

Preferably, the locking protrusion 74 is caught at one side of the locking rib 72 to prevent rotation of the connection terminal 50 in one direction. Thus, the rotation preventing part 70 locks the connection terminal 50 from possibly rotating in one direction. Accordingly, damage to the soldered portion between the connection plate 66 and the PCB 30 that may have been caused by a rotational moment generated at the connection terminal 50 is prevented.

While Figure 5 illustrates one embodiment for a rotation preventing part of the present invention, the rotation preventing part of the present invention may embody any other structure so long as it prevents rotation of the annular connection terminal.

Referring to Figure 6, the release preventing unit 76 comprises a locking groove 78 formed in a circumferential direction on the outer circumferential surface of the terminal mounting part 64 and a locking protrusion 80 protruded inwardly from the inner circumferential surface of the connection terminal 50. Preferably, the locking protrusion 80 may be caught in the locking groove 78 to prevent movement of the connection terminal 50.

Preferably, the locking groove 78 is formed between two protrusion parts 82, formed in the circumferential direction and having a certain distance therebetween at the outer circumferential surface of the terminal mounting part 64.

In operation, the locking protrusion 80 is inserted into the locking groove 78 to prevent the connection terminal 50 from moving in the axial direction with respect to the terminal mounting part 64. Accordingly, release of the connection terminal 50 from the terminal mounting part 64 is prevented.

The preferred operation of the external communication jack in accordance with the present invention will now be described.

When the plug 32 is mounted in the external communication jack 34, the bar-type connection part 56 of the plug 32 is inserted into the insertion passage 40 of the body 42. Moreover, the annular connection part 58 is mounted at the outer circumferential surface of the connection terminal 50.

Accordingly, the first connection portion 60a of the bar-type connection part 56 contacts the first connection terminal 44a formed inside the insertion passage 40, the second connection portion 60b contacts the second connection terminal 44b, the third connection portion 60c contacts the third connection terminal 44c, and the annular connection part 58 is mounted at the outer circumferential surface of the connection terminal 50. Therefore, an electrical signal of the mobile terminal may be transmitted through the plug to the earphone or other device or an electrical signal of the earphone or other device may be transmitted through the plug to the mobile terminal.

In this state, when the plug 32 is rotated, the annular connection part 58 is also rotated while being mounted at the connection terminal 50. However, because the connection terminal 50 is locked at the terminal mounting part 64 by the rotation preventing part 70, rotation of the connection terminal 50 is prevented. Therefore, damage to the soldered portion between the connection plate 66 and the PCB 30 that may have been caused by rotation of the connection terminal 50 is prevented.

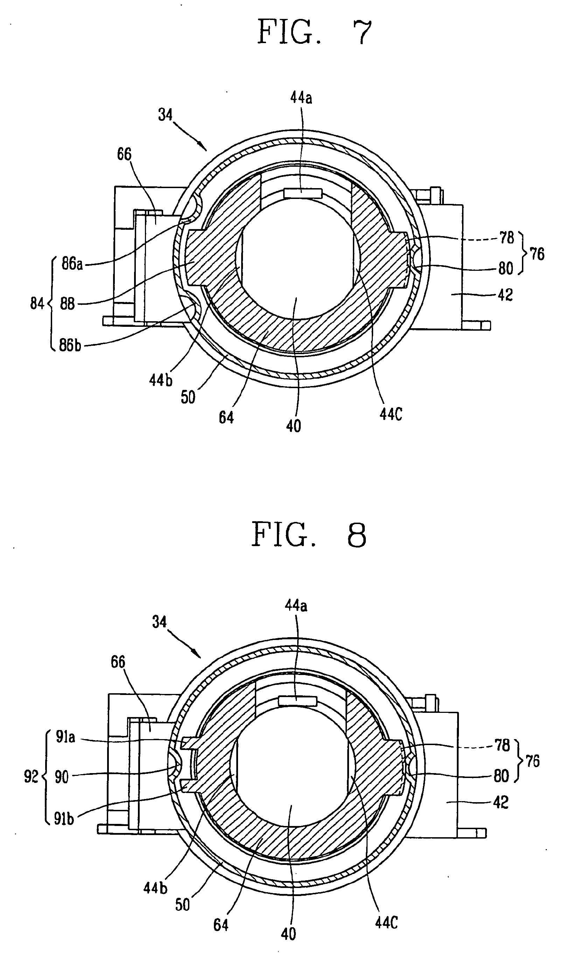

Figure 7 is a sectional view of a rotation preventing part of the external communication jack in accordance with a second embodiment of the present invention.

A rotation preventing part 84 in accordance with the second embodiment of the present invention is used to prevent rotation of the connection terminal 50 in a clockwise or counterclockwise direction. The rotation preventing part 84 comprises a locking rib 88 protruded in an axial direction from an outer circumferential surface of the terminal mounting part 64 of the body 42 and a pair of locking protrusions 86a and 86b inwardly protruding from an inner circumferential surface of the connection terminal 50. Preferably, the locking protrusions 86a and 86b are formed with a certain distance between them and may be caught at both sides of the locking rib 88 to prevent movement of the connection terminal 50 when in operation.

Specifically, because the locking protrusions 86a and 86b may be caught at both sides of the locking rib 88, the connection terminal 50 is prevented from being rotated in the clockwise or counterclockwise direction when the plug 32 is inserted into the terminal mounting part 64.

Figure 8 is a sectional view of a rotation preventing part of the external communication jack in accordance with a third embodiment of the present invention.

A rotation preventing part 92 in accordance with the third embodiment of the present invention comprises a pair of locking ribs 91 a and 91 b protruding in an axial direction from an outer circumferential surface of the terminal mounting part 64. Preferably, the locking ribs 91 a and 91 b have a certain distance between them. The rotation preventing part 92 further comprises a locking protrusion 90 protruded inwardly from an inner circumferential surface of the connection terminal 50. In operation, when the plug 32 is inserted into the terminal mounting part 64, the locking protrusion 90 may be disposed between the locking ribs 91 a and 91 b.

Accordingly, the locking protrusion 90 is caught between the pair of locking ribs 91 a and 91 b. Thus, the connection terminal 50 is prevented from being rotated in the clockwise and counterclockwise direction.

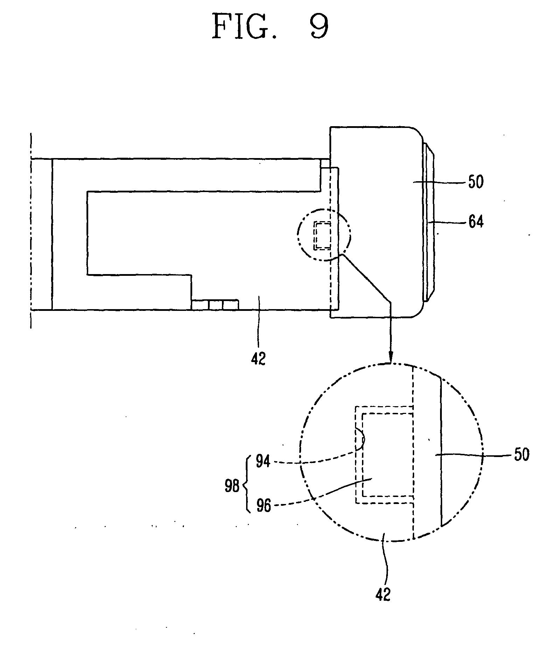

Figure 9 is a side view of a rotation preventing part of the external communication jack in accordance with a fourth embodiment of the present invention.

A rotation preventing part 98 in accordance with the fourth embodiment of the present invention comprises a stopping protrusion 96 extended in an axial direction from an end portion of a rear side of the connection terminal 50 and a stopping recess 94 formed in a longitudinal direction at the body 42, into which the stopping protrusion 96 is inserted to be caught.

Accordingly, when the stopping protrusion 96 formed at the connection terminal 50 is inserted into the stopping recess 94 formed at the body 42, rotation of the annular connection terminal 94 that may be caused by the insertion of the plug 32 into the terminal mounting part 64, is prevented.

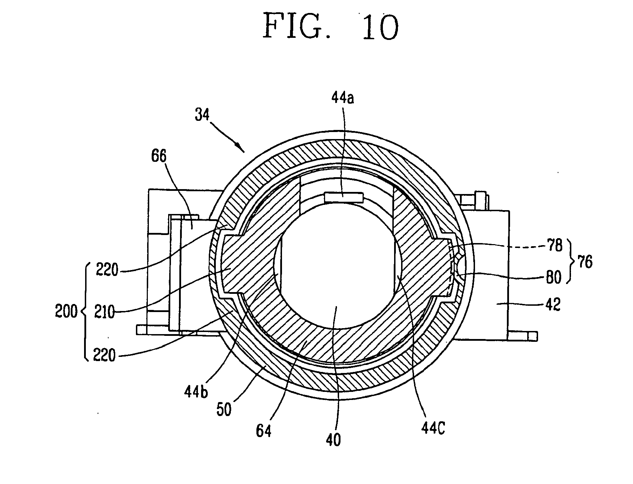

Figure 10 is a sectional view of a rotation preventing part of the external communication jack in accordance with a fifth embodiment of the present invention.

A rotation preventing part 200 in accordance with the fifth embodiment of the present invention comprises a locking protrusion 210 protruding in an axial direction from an outer circumferential surface of the terminal mounting part 64. The rotation preventing part 200 further comprises a locking recess 220 formed in an inner circumferential surface of the connection terminal 50. In operation, when the plug 32 is inserted into the terminal mounting part 64, the locking protrusion 210 is disposed in the locking recess 220.

Accordingly, the locking protrusion 210 is caught in the locking recess 220. Thus, the connection terminal 50 is prevented from being rotated in the clockwise and counterclockwise direction.

As so far described, the external communication jack in accordance with the present invention has the following advantages.

For example, because the rotation preventing part is formed between the terminal mounting part of the body and the annular connection terminal, rotation of the annular connection terminal is prevented. That is, when the annular connection part of the plug is rotated while being mounted at the annular connection terminal, the annular connection terminal is locked in place by the rotation preventing part. Therefore, rotation of the annular connection terminal is prevented, thereby preventing damage to the external communication jack.

## Claims

1. An external communication jack for a terminal, the external communication jack comprising:
a body (42) having an insertion passage (40) for accepting a plug (32);
a terminal mounting part (64) formed on the body (42) for mounting the plug (32); and
a connection terminal (50) formed at an outer surface of the terminal mounting part (64);
**characterized in that** the connection terminal (50) is operatively coupled to circuitry (30) for operating the terminal, and **in that** the external communication jack for the terminal further comprising:
a rotation preventing part (70) for at least partially preventing rotation of the connection terminal (50) with respect to the terminal mounting part (64), wherein the rotation preventing part (70) comprises:
a first rotation preventing part (72, 88, 91 a, 91 b, 210) formed on the outer surface of the terminal mounting part (64); and
a second rotation preventing part (74, 86a, 86b, 90, 220) formed on the inner surface of the connection terminal (50),
wherein the first rotation preventing part (72, 88, 91a, 91b, 210) and the second rotation preventing part (74, 86a, 86b, 90, 220) engage one another to prevent rotation of the connection terminal (50) with respect to the terminal mounting part (64).

2. The external communication jack of claim 1, wherein:
the first rotation preventing part is a locking rib (72) protruding from an outer surface of the terminal mounting part (64); and
the second rotation preventing part is a locking protrusion (74) protruding from an inner surface of the connection terminal, wherein the locking rib (72) operatively engages the locking protrusion (74) to prevent rotation of the connection terminal (50).

3. The external communication jack of claim 1, wherein:
the first rotation preventing part is a locking rib (88) protruding from an outer surface of the terminal mounting part (64); and
the second rotation preventing part is a pair of locking protrusions (86a, 86b) protruding from an inner surface of the connection terminal (50), wherein the locking rib (88) operatively engages either of the pair of locking protrusions (86a, 86b) to prevent rotation of the connection terminal (50) in at least one of a clockwise and counterclockwise direction.

4. The external communication jack of claim 1, wherein:
the first rotation preventing part is a pair of locking ribs (91 a, 91 b) protruding from an outer surface of the terminal mounting part (64); and
the second rotation preventing part is a locking protrusion (90) protruding from an inner surface of the connection terminal (50), wherein each of the pair of locking ribs (91 a, 91 b) operatively engages the locking protrusion (90) respectively to prevent rotation of the connection terminal (50) in at least one a clockwise and counterclockwise direction.

5. The external communication jack of claim 1, wherein:
the first rotation preventing part is a locking rib (210) protruding from an outer surface of the terminal mounting part (64); and
the second rotation preventing part is a locking recess (220) formed in an inner surface of the connection terminal, wherein the locking rib (210) inserts into the locking recess (220) to prevent rotation of the connection terminal (50).

6. The external communication jack of claim 1, further comprising:
a release preventing unit (76) operating between the connection terminal (50) and the terminal mounting part (64) for preventing axial movement of the connection terminal (50) with respect to the terminal mounting part (64).

7. The external communication jack of claim 6, wherein the release preventing unit (76) comprises:
a locking groove (78) formed in a rotational direction on an outer surface of the terminal mounting part (64); and
a locking protrusion (80) protruding from an inner surface of the connection terminal (50), wherein the locking protrusion (80) operatively engages the locking groove (78) to prevent the axial movement of the connection terminal (50).

8. The external communication jack of claim 7, wherein the locking groove (78) is formed by two protrusion portions (82) formed in a rotational direction on the outer surface of the terminal mounting part (64) and having a certain distance therebetween.

9. The external communication jack of claim 1, wherein the insertion passage (40) houses at least one connection terminal (44a, 44b, 44c) for contacting a connection part (56) of the plug.

10. A mobile terminal for accepting a plug, the mobile terminal comprising:
a main body (10);
circuitry (30) housed within the main body (10) for operating the mobile terminal; and
the external communication jack (34) of any one of claims 1 to 9, the external communication jack (34) being operatively connected to the circuitry (30).

11. An external communication jack for a terminal, the external communication jack comprising:
a body (42) having an insertion passage (40) for accepting a plug (32);
a terminal mounting part (64) formed on the body (42) for mounting the plug (32);
a connection terminal (50) formed at an outer surface of the terminal mounting part (64);
**characterized in that** the connection terminal (50) is operatively coupled to circuitry (30) for operating the terminal and **in that** the external communication jack for the terminal further comprising:
a rotation preventing part (98) formed on the body (42) and the connection terminal (50) for at least partially preventing rotation of the connection terminal (50) with respect to the terminal mounting part (64), wherein the rotation preventing part (98) comprises:
a stopping protrusion (96) extending from a rear side of the connection terminal (50); and
a stopping recess (94) formed in a longitudinal direction at the body (42), wherein the stopping protrusion (96) is operatively inserted into the stopping recess (94) to prevent rotation of the connection terminal (50).

12. A mobile terminal for accepting a plug, the mobile terminal comprising:
a main body (10);
circuitry (30) housed within the main body (10) for operating the mobile terminal; and
the external communication jack (34) of claim 11, the external communication jack (34) being operatively connected to the circuitry (30).

## Patentansprüche

1. Externe Kommunikationsbuchse für ein Endgerät, wobei die externe Kommunikationsbuchse umfasst:
einen Körper (42) mit einem Einsteckkanal (40) zum Aufnehmen eines Steckers (32);
einen Anschlussmontageabschnitt (64), der am Körper (42) ausgebildet ist, um den Stecker (32) zu montieren; und
einen Verbindungsanschluss (50), der an einer äußeren Oberfläche des Anschlussmontageabschnitts (64) ausgebildet ist;
**dadurch gekennzeichnet, dass** der Verbindungsanschluss (50) mit einer Schaltungsanordnung (30) zum Betreiben des Endgeräts funktional verbunden ist und dass die externe Kommunikationsbuchse für das Endgerät ferner umfasst:
einen Drehverhinderungsabschnitt (70), um eine Drehung des Verbindungsanschlusses (50) in Bezug auf den Anschlussmontageabschnitt (64) wenigstens teilweise zu verhindern, wobei der Drehverhinderungsabschnitt (70) umfasst:
einen ersten Drehverhinderungsabschnitt (72, 88, 91a, 91b, 210), der an der äußeren Oberfläche des Anschlussmontageabschnitts (64) ausgebildet ist; und
einen zweiten Drehverhinderungsabschnitt (74, 86a, 86b, 90, 220), der an der inneren Oberfläche des Verbindungsanschlusses (50) ausgebildet ist,
wobei der erste Drehverhinderungsabschnitt (72, 88, 91a, 91b, 210) und der zweite Drehverhinderungsabschnitt (74, 86a, 86b, 90, 220) miteinander in Eingriff sind, um eine Drehung des Verbindungsanschlusses (50) in Bezug auf den Anschlussmontageabschnitt (64) zu verhindern.

2. Externe Kommunikationsbuchse nach Anspruch 1, wobei:
der erste Drehverhinderungsabschnitt eine Verriegelungsrippe (72) ist, die von einer äußeren Oberfläche des Anschlussmontageabschnitts (64) vorsteht; und
der zweite Drehverhinderungsabschnitt ein Verriegelungsvorsprung (74) ist, der von einer inneren Oberfläche des Verbindungsanschlusses vorsteht, wobei die Verriegelungsrippe (72) mit dem Verriegelungsvorsprung (74) funktional in Eingriff ist, um eine Drehung des Verbindungsanschlusses (50) zu verhindern.

3. Externe Kommunikationsbuchse nach Anspruch 1, wobei:
der erste Drehverhinderungsabschnitt eine Verriegelungsrippe (88) ist, die von einer äußeren Oberfläche des Anschlussmontageabschnitts (64) vorsteht; und
der zweite Drehverhinderungsabschnitt ein Paar Vernegelungsvorsprünge (86a, 86b) umfasst, die von einer inneren Oberfläche des Verbindungsanschlusses (50) vorstehen, wobei die Verriegelungsrippe (88) mit jedem der beiden Vernegelungsvorsprünge (86a, 86b) funktional in Eingriff ist, um eine Drehung des Verbindungsanschlusses (50) im Uhrzeigersinn und/oder im Gegenuhrzeigersinn zu verhindern.

4. Externe Kommunikationsbuchse nach Anspruch 1, wobei:
der erste Drehverhinderungsabschnitt ein Paar Verriegelungsrippen (91a, 91b) umfasst, die von einer äußeren Oberfläche des Anschlussmontageabschnitts (64) vorstehen; und
der zweite Drehverhinderungsabschnitt ein Verriegelungsvorsprung (90) ist, der von einer inneren Oberfläche des Verbindungsanschlusses (50) vorsteht, wobei jede der beiden Verriegelungsrippen (91a, 91b) mit dem Verriegelungsvorsprung (90) funktional in Eingriff ist, um jeweils eine Drehung des Verbindungsanschlusses (50) im Uhrzeigersinn und/oder im Gegenuhrzeigersinn zu verhindern.

5. Externe Kommunikationsbuchse nach Anspruch 1, wobei:
der erste Drehverhinderungsabschnitt eine Verriegelungsrippe (210) ist, die von einer äußeren Oberfläche des Anschlussmontageabschnitts (64) vorsteht; und
der zweite Drehverhinderungsabschnitt eine Verriegelungsaussparung (220) ist, die in einer inneren Oberfläche des Verbindungsanschlusses ausgebildet ist, wobei die Verriegelungsrippe (210) in die Verriegelungsaussparung (220) eingesetzt ist, um eine Drehung des Verbindungsanschlusses (50) zu verhindern.

6. Externe Kommunikationsbuchse nach Anspruch 1, die ferner umfasst:
eine Freigabeverhinderungseinheit (76), die zwischen dem Verbindungsanschluss (50) und dem Anschlussmontageabschnitt (64) wirkt, um eine axiale Bewegung des Verbindungsanschlusses (50) in Bezug auf den Anschlussmontageabschnitt (64) zu verhindern.

7. Externe Kommunikationsbuchse nach Anspruch 6, wobei die Freigabeverhinderungseinheit (76) umfasst:
eine Verriegelungsnut (78), die in einer Drehrichtung auf einer äußeren Oberfläche des Anschlussmontageabschnitts (64) ausgebildet ist; und
einen Verriegelungsvorsprung (80), der von einer inneren Oberfläche des Verbindungsanschlusses (50) vorsteht, wobei der Verriegelungsvorsprung (80) mit der Verriegelungsnut (78) funktional in Eingriff ist, um die axiale Bewegung des Verbindungsanschlusses (50) zu verhindern.

8. Externe Kommunikationsbuchse nach Anspruch 7, wobei die Verriegelungsnut (78) durch zwei Vorsprungsabschnitte (82) gebildet ist, die in einer Drehrichtung auf der äußeren Oberfläche des Anschlussmontageabschnitts (64) ausgebildet sind und zwischen denen ein bestimmter Abstand vorhanden ist.

9. Externe Kommunikationsbuchse nach Anspruch 1, wobei der Einsteckkanal (40) wenigstens einen Verbindungsanschluss (44a, 44b, 44c) aufnimmt, um einen Kontakt mit einem Kontaktabschnitt (56) des Steckers herzustellen.

10. Mobiles Endgerät für die Aufnahme eines Steckers, wobei das mobile Endgerät umfasst:
einen Hauptkörper (10);
eine Schaltungsanordnung (30), die in dem Hauptkörper (10) aufgenommen ist, um das mobile Endgerät zu betreiben; und
die externe Kommunikationsbuchse (34) nach einem der Ansprüche 1 bis 9, wobei die externe Kommunikationsbuchse (34) mit der Schaltungsanordnung (30) funktional verbunden ist.

11. Externe Kommunikationsbuchse für ein Endgerät, wobei die externe Kommunikationsbuchse umfasst:
einen Körper (42) mit einem Einsteckkanal (40) für die Aufnahme eines Steckers (32);
einen Anschlussmontageabschnitt (64), der am Körper (42) ausgebildet ist, um den Stecker (32) zu montieren;
einen Verbindungsanschluss (50), der an einer äußeren Oberfläche des Anschlussmontageabschnitts (64) ausgebildet ist;
**dadurch gekennzeichnet, dass** der Verbindungsanschluss (50) mit der Schaltungsanordnung (30) funktional gekoppelt ist, um das Endgerät zu betreiben, und dass die externe Kommunikationsbuchse für das Endgerät ferner umfasst:
einen Drehverhinderungsabschnitt (98), der an dem Körper (42) und an dem Verbindungsanschluss (50) ausgebildet ist, um eine Drehung des Verbindungsanschlusses (50) in Bezug auf den Anschlussmontageabschnitt (64) wenigstens teilweise zu verhindern, wobei der Drehverhinderungsabschnitt (98) umfasst:
einen Anschlagvorsprung (96), der sich von einer Rückseite des Verbindungsanschlusses (50) erstreckt; und
eine Anschlagaussparung (94), die in einer Längsrichtung am Körper (42) ausgebildet ist, wobei der Anschlagvorsprung (96) in die Anschlagaussparung (94) funktional eingesetzt ist, um eine Drehung des Verbindungsanschlusses (50) zu verhindern.

12. Mobiles Endgerät für die Aufnahme eines Steckers, wobei das mobile Endgerät umfasst:
einen Hauptkörper (10);
eine Schaltungsanordnung (30), die in dem Hauptkörper (10) aufgenommen ist, um das mobile Endgerät zu betreiben; und
die externe Kommunikationsbuchse (34) nach Anspruch 11, wobei die externe Kommunikationsbuchse (34) mit der Schaltungsanordnung (30) funktional verbunden ist.

## Revendications

1. Jack pour communication externe pour un terminal, le jack pour communication externe comprenant :
un corps (42) comportant un passage d'insertion (40) destiné à recevoir un connecteur mâle (32) ;
une partie de montage de terminal (64) formée sur le corps (42), destinée à monter le connecteur mâle (32) ; et
un terminal de connexion (50) formé sur la surface extérieure de la partie de montage de terminal (64) ;
**caractérisé en ce que** le terminal de connexion (50) est couplé fonctionnellement à des circuits (30) pour faire fonctionner le terminal, et **en ce que** le jack pour communication externe pour le terminal comprend en outre :
une partie de prévention de rotation (70) pour empêcher au moins partiellement la rotation du terminal de connexion (50) par rapport à la partie de montage de terminal (64) dans lequel la partie de prévention de rotation (70) comprend :
une première partie de prévention de rotation (72, 88, 91a, 91 b, 210) formée sur la surface extérieure de la partie de montage de terminal (64) ; et
une deuxième partie de prévention de rotation (74, 86a, 86b, 90, 220) formée sur la surface intérieure du terminal de connexion (50),
dans lequel la première partie de prévention de rotation (72, 88, 91a, 91b, 210) et la deuxième partie de prévention de rotation (74, 86a, 86b, 90, 220) viennent en prise l'une avec l'autre pour empêcher la rotation du terminal de connexion (50) par rapport à la partie de montage de terminal (64).

2. Jack pour communication externe selon la revendication 1, dans lequel :
la première partie de prévention de rotation est une nervure de blocage (72) faisant saillie depuis la surface extérieure de la partie de montage de terminal (64) ; et
la deuxième partie de prévention de rotation est une protubérance de blocage (74) faisant saillie depuis la surface intérieure du terminal de connexion, dans lequel la nervure de blocage (72) vient en prise fonctionnellement avec la protubérance de blocage (74) pour empêcher la rotation du terminal de connexion (50).

3. Jack pour communication externe selon la revendication 1, dans lequel :
la première partie de prévention de rotation est une nervure de blocage (88) faisant saillie depuis la surface extérieure de la partie de montage de terminal (64) ; et
la deuxième partie de prévention de rotation est constituée d'une paire de protubérances de blocage (86a, 86b) faisant saillie depuis la surface intérieure du terminal de connexion (50), dans lequel la nervure de blocage (88) vient en prise fonctionnellement avec l'une ou l'autre protubérance de la paire de protubérances de blocage (86a, 86b) pour empêcher la rotation du terminal de connexion (50) au moins dans un sens parmi le sens des aiguilles d'une montre et le sens inverse des aiguilles d'une montre.

4. Jack pour communication externe selon la revendication 1, dans lequel :
la première partie de prévention de rotation est constituée d'une paire de nervures de blocage (91a, 91b) faisant saillie depuis la surface extérieure de la partie de montage de terminal (64) ; et
la deuxième partie de prévention de rotation est une protubérance de blocage (90) faisant saillie depuis la surface intérieure du terminal de connexion (50), dans lequel chaque nervure de la paire de nervures de blocage (91a, 91b) vient respectivement en prise fonctionnellement avec la protubérance de blocage (90) pour empêcher la rotation du terminal de connexion (50) au moins dans un sens parmi le sens des aiguilles d'une montre et le sens inverse des aiguilles d'une montre.

5. Jack pour communication externe selon la revendication 1, dans lequel :
la première partie de prévention de rotation est une nervure de blocage (210) faisant saillie depuis la surface extérieure de la partie de montage de terminal (64) ; et
la deuxième partie de prévention de rotation est une cavité de blocage (220) formée dans la surface intérieure du terminal de connexion, dans lequel la nervure de blocage (210) s'insère dans la cavité de blocage (220) pour empêcher la rotation du terminal de connexion (50).

6. Jack pour communication externe selon la revendication 1, comprenant en outre :
une unité de prévention de libération (76) agissant entre le terminal de connexion (50) et la partie de montage de terminal (64) pour empêcher tout mouvement axial du terminal de connexion (50) par rapport à la partie de montage de terminal (64).

7. Jack pour communication externe selon la revendication 6, dans lequel l'unité de prévention de libération (76) comprend :
une gorge de blocage (78) formée dans le sens de la rotation sur la surface extérieure de la partie de montage de terminal (64) ; et
une protubérance de blocage (80) faisant saillie depuis la surface intérieure du terminal de connexion (50), dans lequel la protubérance de blocage (80) vient en prise fonctionnellement avec la gorge de blocage (78) pour empêcher tout mouvement axial du terminal de connexion (50).

8. Jack pour communication externe selon la revendication 7, dans lequel la gorge de blocage (78) est formée par deux parties de protubérance (82) formées dans le sens de la rotation sur la surface extérieure de la partie de montage de terminal (64) et avec une certaine distance entre elles.

9. Jack pour communication externe selon la revendication 1, dans lequel le passage d'insertion (40) loge au moins un terminal de connexion (44a, 44b, 44c) pour établir un contact avec une partie de connexion (56) du connecteur mâle.

10. Terminal mobile destiné à recevoir un connecteur mâle, le terminal mobile comprenant :
un corps principal (10) ;
des circuits (30) logés à l'intérieur du corps principal (10) pour faire fonctionner le terminal mobile ; et
le jack pour communication externe (34) selon l'une quelconque des revendications 1 à 9, le jack pour communication externe (34) étant connecté fonctionnellement aux circuits (30).

11. Jack pour communication externe pour un terminal, le jack pour communication externe comprenant :
un corps (42) comportant un passage d'insertion (40) destiné à recevoir un connecteur mâle (32) ;
une partie de montage de terminal (64) formée sur le corps (42), destinée à monter le connecteur mâle (32) ; et
un terminal de connexion (50) formé sur la surface extérieure de la partie de montage de terminal (64) ;
**caractérisé en ce que** le terminal de connexion (50) est couplé fonctionnellement à des circuits (30) pour faire fonctionner le terminal, et **en ce que** le jack pour communication externe pour le terminal comprend en outre :
une partie de prévention de rotation (98) formée sur le corps (42) et le terminal de connexion (50) pour empêcher au moins partiellement la rotation du terminal de connexion (50) par rapport à la partie de montage de terminal (64) dans lequel la partie de prévention de rotation (98) comprend :
une protubérance d'arrêt (96) s'étendant depuis la face arrière du terminal de connexion (50) ; et
une cavité d'arrêt (94) formée dans la direction longitudinale sur le corps (42) dans lequel la protubérance d'arrêt (96) est insérée fonctionnellement dans la cavité d'arrêt (94) pour empêcher la rotation du terminal de connexion (50).

12. Terminal mobile destiné à recevoir un connecteur mâle, le terminal mobile comprenant :
un corps principal (10) ;
des circuits (30) logés à l'intérieur du corps principal (10) pour faire fonctionner le terminal mobile ; et
le jack pour communication externe (34) selon la revendication 11, le jack pour communication externe (34) étant connecté fonctionnellement aux circuits (30).
